(19) Europäisches Patentamt
European Patent Office
Office européen des brevets

(11) **EP 2 028 646 A1**

(12) **EUROPEAN PATENT APPLICATION**

(43) Date of publication:
**25.02.2009 Bulletin 2009/09**

(51) Int Cl.:
*G10L 15/06* (2006.01)

(21) Application number: **08162564.2**

(22) Date of filing: **18.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **17.08.2007 GB 0716157**

(71) Applicant: **Envox International Limited**
**Basingstoke, Hampshire RG24 8WH (GB)**

(72) Inventor: **Thomas, Trevor**
**Cambridge, Cambridgeshire CB24 6AW (GB)**

(74) Representative: **Wright, Howard Hugh Burnby**
**Withers & Rogers LLP**
**Goldings House**
**2 Hays Lane**
**London**
**SE1 2HW (GB)**

(54) **Device for modifying and improving the behaviour of speech recognition systems**

(57)  A speech recognition system comprises a controller application, a speech recogniser, and a modification apparatus disposed between them. The controller application has an output arranged to produce a speech signal, an input arranged to receive a recognised speech result signal and a control command output arranged to produce a command signal. The speech recogniser has a pattern matcher, a speech input arranged to receive the speech signal from the controller application, an output arranged to produce the recognised speech recognised signal and a control command input arranged to receive the command signal. The modification apparatus is disposed between the output of the controller application and the input of the speech recogniser; between the output of the speech recogniser and the input of the controller application; and between the control command output of the controller application and the control command input of the speech recogniser. The modification apparatus is arranged to modify at least one of the signals between the controller application and the speech recogniser. In this way speech recognition accuracy can be significantly improved.

FIG. 4

EP 2 028 646 A1

**Description**

This invention relates to methods of recognizing speech and to speech recognition systems in which speech is recognized by the use of a pattern matcher. Such systems are used as part of an interactive system which conducts a dialogue with a person, normally a telephone caller, who wishes to carry out some kind of interaction. Examples of such interactions are to pay a bill, to leave a utility meter reading, and to order goods.

Speech recognition systems include a pattern matcher which takes an input signal, processes it, and attempts to find a pattern represented by the input signal. For a speech recognizer, the input signal is a stream of speech which is decoded by the recognizer into a string of words that represents the speech signal.

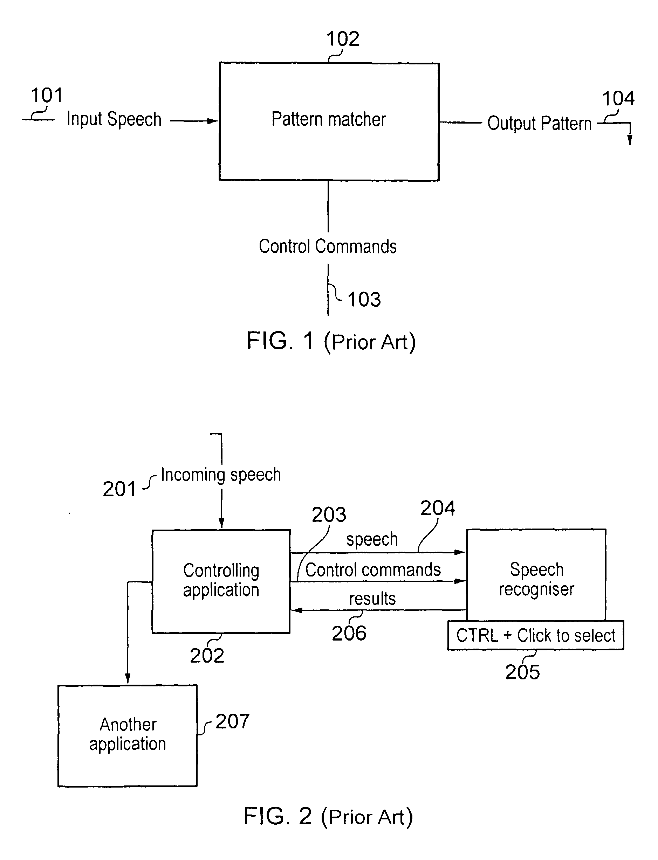

Speech recognizers generally have an architecture as shown in Figure 1, in which an input speech signal 101 is presented to the pattern matcher 102 which then attempts to hypothesise the correct output pattern 104 through the use of an internal algorithm. The pattern matcher 102 operates under the control of control commands 103 to process the speech and produce the output pattern 104, which is then returned to a controlling application.

The pattern matcher 102 is under the control of the control commands 103 which control the operation of the pattern matcher 102. The recognizer is likely to be controlled by the controlling application that also controls the presentation of the speech to the recognizer. This same controlling application will also be responsible for receiving the results of the speech recognition. In Figure 2, the controlling application 202 controls the manner in which the speech recognizer 205 behaves by the use of the control commands 203 which it sends periodically to the recognizer 205. The incoming speech that is to be processed 201 is periodically forwarded in the form of a speech signal 204 to the recognizer 205 which, under the control of the commands 203 processes the speech 204 and produces results 206 which are returned to the controlling application 202. In this way, the controlling application 202 can direct the behaviour of the speech recognizer 205 and perhaps issue commands to other applications 207 based on the results of the recognition operation.

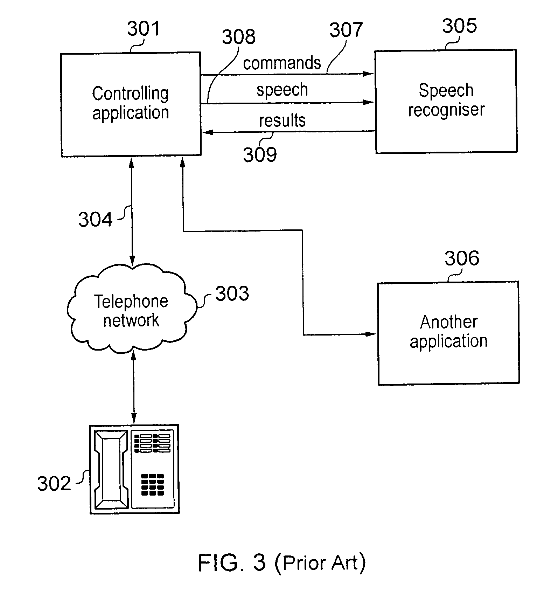

A common implementation of a speech recognition system is to control the dialogue between a caller using a telephone, and an application that is being used by the caller, to perform some task, such as paying a bill or ordering goods from a company. Such an arrangement is shown in Figure 3 in which a controlling application 301 answers a telephone call from a caller who is using a telephone 302 via a telephone network 303, and conducts a dialogue 304 with the caller. Typically, the application 301 will ask questions of the caller who will then verbally respond. In order that the application understands the meaning of the caller's speech, the speech 308 is forwarded to the speech recognizer 305 via a connection 308 which attempts to understand it with the restrictions placed upon it by the controlling commands 307 sent from the controlling application 301. The recognizer 305 then returns its results to the controlling application via the connection 309. The dialogue 304 between the caller and the controlling application 301 continues until the controlling application has sufficient information to communicate to another application 306 which performs a task, such as returning the balance of the caller's bank account.

Many systems have been successfully constructed using this structure, but the system is not perfect, and can produce errors that are found only in spoken dialogue systems. These errors limit the ability of the controlling application to deliver a complete solution to the handling of the call, and it is frequently the case that the controlling application will have to hand the call over to a human being to provide further assistance to the caller. This limits the acceptability of the automatic system. Some of the problems that the system has in producing errors are:

1. The speech recognizer makes a mistake in understanding the caller's speech.
2. The caller is unable to understand the controlling application and so cannot produce a response that contains the sort of meaning that the controlling application has instructed the speech recognizer to attempt to understand.
3. The demands of the task are such that the speech recognizer cannot be configured to understand the caller. When this happens the controlling application will have been created such that it asks simpler questions of the caller which the speech recognizer can be configured to understand. However, the caller might find these restrictions very hard to behave within, causing the dialogue to become unnatural.
4. The quality of the telephone connection between the caller and the controlling application might vary such that sometimes the speech being forwarded to the speech recognizer cannot be optimally processed. This might happen if line noise or background noise in the caller's proximity is transmitted to the speech recognizer at such a volume that it masks the speech from the caller.

The aim of the present invention is to reduce some of the problems associated with voice recognition systems.

According to a first aspect of the invention a speech recognition system comprises a controller application having an output arranged to produce a speech signal, an input arranged to receive a recognized speech result signal, and a control command output arranged to produce a command signal; a speech recognizer having a pattern matcher, a speech input arranged to receive the speech signal from the controller application, an output arranged to produce the recognized speech result signal and a control command input arranged to receive the command signal, characterised by a modification apparatus disposed between the output of the controller application and the input of the speech recognizer; between the output of the speech recognizer and the input of the controller application; and between the control command output of the controller application and the control command input of the speech recognizer, the modification apparatus arranged to modify at least one of the signals between the controller application and the speech recognizer.

The modification apparatus gives a whole new range of opportunities to improve voice recognition systems in that it allows the apparatus to modify the behaviour of either the speech recognizer or the controlling application based upon a combination of the results of the recognition from previous spoken utterances or from separate, external data sources. The purpose of these modifications is to reduce the number of errors that occur in the dialogue with the caller and so increase the probability that the caller will be able to complete the call.

It is preferred that the system further includes a database linked to the modification apparatus. The database may be structured to store data concerning individuals including characteristics of that individual's speech or of system settings or grammars which are more appropriate for recognition of that individual's speech. The database might be structured to store data concerning individuals for use by the speech recogniser and may be further structured to store data concerning individuals for use by the modification apparatus. The database might further be structured to store data concerning individuals for use by the controlling application.

It is also advantageous to include memory arranged to store data.

In one embodiment, the system further comprises a secondary speech recogniser connected to the modification apparatus. In another arrangement, the system further comprises a second pattern matcher connected to the modification apparatus.

In some embodiments, the system further comprises a speaker verification apparatus connected to at least one of the modification apparatus and the speech recogniser.

In some of the embodiments, the system further comprises a speech signal measuring device. This preferably measures the strength of the speech signal and is able to identify when a speaker is speaking or is not speaking.

According to one arrangement, the modification apparatus is disposed between the control command output of the controller application and the control command input of the speech recogniser, the modification apparatus being arranged to modify the command signal between the controller application and the speech recogniser. Various additional advantageous features of this arrangement are set out in the claims.

According to a further arrangement, the modification apparatus is disposed between the speech signal output of the controller application and the speech input of the speech recogniser, the modification apparatus being arranged to modify the speech signal between the controller application and the speech recogniser.

Further advantageous features of this arrangement are set out in the claims.

In another arrangement, the modification apparatus is disposed between a speech result signal output of the speech recogniser and the speech result input of the controller application, the modification apparatus arranged to modify the speech result signal between the speech recogniser and the controller application.

Further advantageous features of this arrangement are set out in the claims.

In a further arrangement, the modification apparatus is disposed between the speech signal output of the controller application and the speech input of the speech recogniser, and between the control command output of the controller application and the control command input of the speech recogniser, the modification apparatus to modify the speech signal between the controller application and the speech recogniser, and to modify the command signal between the controller application and the speech recogniser.

A number of other advantageous features of this arrangement are set out in the claims.

In a further arrangement, the modification apparatus is disposed between the speech signal output of the controller application and the speech signal input of the speech recogniser and between the speech result signal output of the speech recogniser and the speech result of the input of the controller application, the modification apparatus arranged to modify the speech signal between the controller application and the speech recogniser and to modify the speech result signal between the speech recogniser and the controller application.

In a further arrangement, the modification apparatus is disposed between the speech result signal output of the speech recogniser and the speech result input of the controller application, and between the control command output of the controller application and the control command input of the speech recogniser, the modification apparatus arranged to modify the speech result signal between the speech recogniser and the controller application and arranged to modify the command signal between the controller application and the speech recogniser.

In a further arrangement, the modification apparatus is disposed between the speech signal output of the controller application and the speech signal input of the speech recogniser, between the speech result signal output of the speech recogniser and the speech result of the input of the controller application, and between the control command output of the controller application and the control command input of the speech recogniser, the modification apparatus arranged to modify the speech signal between the controller application and the speech recogniser, to modify the speech result signal between the speech recogniser and the controller application, and to modify the command signal between the controller application and the speech recogniser.

According to a second aspect of the invention, a method of recognising speech in a system comprises a controller application having an output arranged to produce a speech signal, an input arranged to receive a recognised speech result signal and a control command output arranged to produce a command signal; and a speech recogniser having a pattern matcher, a speech input arranged to receive the speech signal, an output arranged to produce the recognised speech result signal and a control command input arranged to receive the command signal, characterised by the modification of at least one of the signals between the controller application and the speech recogniser.

According to one arrangement, the command signal is modified between the controller application and the speech recogniser. Various advantageous steps relating to this arrangement are set out in the claims.

According to another arrangement, the speech signal between the controller application and the speech recogniser is modified. Various preferred steps relating to this arrangement are set out in the claims.

According to a further arrangement, the speech result signal between the speech recogniser and the controller application is modified. Further advantageous steps relating to this arrangement are set out in the claims.

According to another arrangement, both the speech signal and the command signal are modified.

According to a further arrangement, the speech signal and the speech result signal are modified.

According to a further arrangement, the speech result signal between the speech recogniser and the controller application and the command signal are modified.

According to a further arrangement, the speech signal, the speech result signal and the command signal are modified.

The present invention will now be described by way of example only and with reference to the drawings in which:

Figure 1 is a block diagram showing a speech recognizer according to the prior art;

Figure 2 is a block diagram showing a speech recognizer controlled by a controlling application according to the prior art;

Figure 3 is a block diagram showing a voice recognition system in dialogue with a user over a telephone network according to the prior art;

Figure 4 is a block diagram showing a first embodiment of a voice recognition system according to the invention;

Figure 5 is a block diagram showing a computer system on which the voice recognition system is executed.

Figure 6 is a block diagram showing a voice recognition system according to a second embodiment of the invention;

Figure 7 is a block diagram showing a voice recognition system with a store of commands according to a fourth embodiment;

Figure 8 is a waveform showing the energy of a caller's speech during a dialogue;

Figures 9, 10 and 11 are further waveforms showing the energy of a caller's speech and indicating the period of time of silence between successive words uttered by the caller;

Figure 12 is a block diagram showing a voice recognition system incorporating a speaker verification apparatus; and

**First Embodiment:**

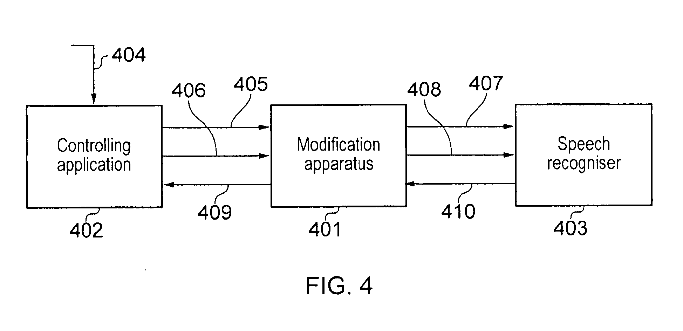

The first embodiment of this invention is shown in Figure 4, and shows the invention in general terms. The voice recognition system includes a controlling application 402, a speech recognizer 403 and a modification apparatus 401 disposed between them. The controlling application 402 receives speech 404 from an external source, such as a caller to an automatic call handling centre. The controlling application 402 includes an output arranged to produce a speech signal 406, a control command output for producing a command signal 405 and an input arranged to receive a processed speech result signal 409. Both of the speech signal 406 and the command signal 405 are directed to the modification apparatus 401. The processed speech result signal is received by the controlling application 402 from the modification apparatus 401. The speech recognizer 403 has a speech input arranged to receive a processed speech signal 408 from the modification apparatus 401 which is a processed version of the speech signal 406. The speech recognizer 403 further includes a control command input arranged to receive a processed command signal 407 from the modification apparatus 401. The processed command signal 407 is a processed version of the command signal 405.

The speech recognizer 403 also includes an output arranged to produce a speech result signal 410 which is passed to the modification apparatus 401.

The modification apparatus 401 mediates between the controlling application 402 and the speech recognizer 403, having the ability to modify any data to which it has access, but before forwarding that data to either the controlling application 402 or the speech recognizer 403 for further processing.

The modification apparatus 401 receives the command signals 405 that are usually destined for the speech recognizer 403 and the speech signal 406 from the caller. It is possible for it to process either one or both of them in many different ways before passing the processed command signal 407 and the processed speech signal 408, to the speech recognizer 403. The speech recognizer 403 then performs a speech recognition upon the speech signal 408 and returns its result, the speech result signal 410, to the modification apparatus 401, which then optionally processes it before returning the processed speech result signal to the controlling application 402.

Using this form of apparatus, it is possible to introduce processing methods to any or all of the speech signal 406, the command signal 405 or the speech result signal 410 , which will improve the recognition accuracy.

**Implementing Computer System:**

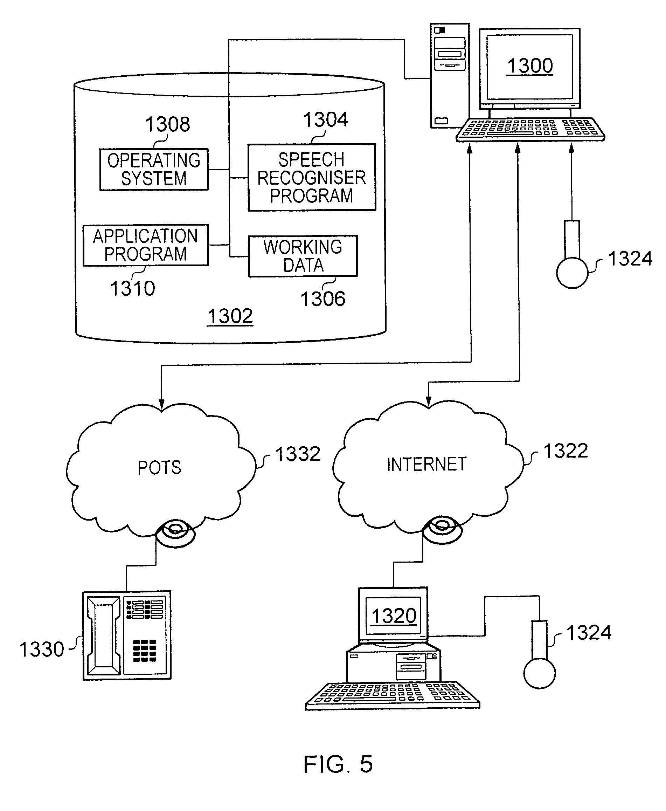

Figure 5 is a block diagram illustrating a computer system which may embody the present invention, and the context in which the computer system may be operated. More particularly, the computer system 1300 could be conventional in its construction in that it is provided with a central processing unit, memory, long term storage devices such as hard disk drives, CD ROMs, CD-R, CD-RW, DVD ROMs or DVD RAMs, or the like, as well as input and output devices such as keyboards, screens, or other pointing devices. The computer system 1300 is, as mentioned, provided with a data storage medium 1302, such as a hard disk drive, floppy disk drive, CD ROM, CD-R, CD-RW, DVD ROM or RAM, or the like upon which is stored computer programs arranged to control the operation of the computer system 1300 when executed, as well as other working data. In particular, operating system program 1308 is provided stored on the storage medium 1302, and which performs the usual operating system functions to enable the computer system 1300 to operate. Additionally provided is an application program 1310, which is a user application program to enable a user of the computer system 1300 to perform tasks enabled by the application program. For example, the application program 1310 might be a word processing application such as Microsoft Word, Lotus WordPro, or the like, or it may be any other application, such as a web browser application, a database application, a spreadsheet application, etc. In the embodiments described in this patent specification, the application software would normally be the software within an automated call centre in which a caller telephones the automated call centre and makes contact with the software which then handles the call asking appropriate questions and listening to and interpreting replies from the caller. Additionally provided is a speech recognizer program 1304 which when executed by the computer system 1300 operates as a speech recognizer to recognize any input audio signals input thereto as speech, and to output a speech result signal, usually in the form of text, indicative of the recognized speech.

The speech recognizer which is described in the various embodiments of this specification takes its input commands from the controlling application and speech to be processed, usually from the controlling application. It then issues commands to the speech recognizer program 1304 and presents speech to the speech recognition program for recognition. It is also able to receive command instructions or response acknowledgements from the speech recognizer, which it will then either process internally or forward to the controlling application.

An example of the use of the first embodiment above will now be described. From it, the advantages gained by using the invention will be appreciated.

**Example 1: Modification of commands before presentation to the recognizer:**

In conventional systems, when a speech recognizer is instructed to perform a recognition, it receives the instruction as a sequence of command signals from the controlling application. These command signals can specify the values of a variety of variables. For example, when a particular type of recognition is taking place, the application program might specify that the speech recognizer must wait 1s after the caller has finished talking before returning the results back to the controlling application.

In the present invention, and described here with reference to the first embodiment shown in Figure 4, the modification apparatus 401 is able to modify the command signals according to the actual situation. For example, it might be determined that a 1s delay will be insufficient for some callers to complete their utterances as they speak very slowly. Therefore, the it might be appropriate to override the specified 1s delay and replace it with a 2s one. Conversely, for a fast speaker, it might be appropriate to reduce the delay below 1s.

For this modification to be possible, the modification apparatus 401 will need to be aware of the typical duration of pauses between words that the current caller is likely to use. This information can be derived either from previous utterances in the current call, or from a database of information that is associated with the caller, such as their account number. This embodiment uses the utterances from the current call, but the second embodiment uses a database, and is described later in this specification.

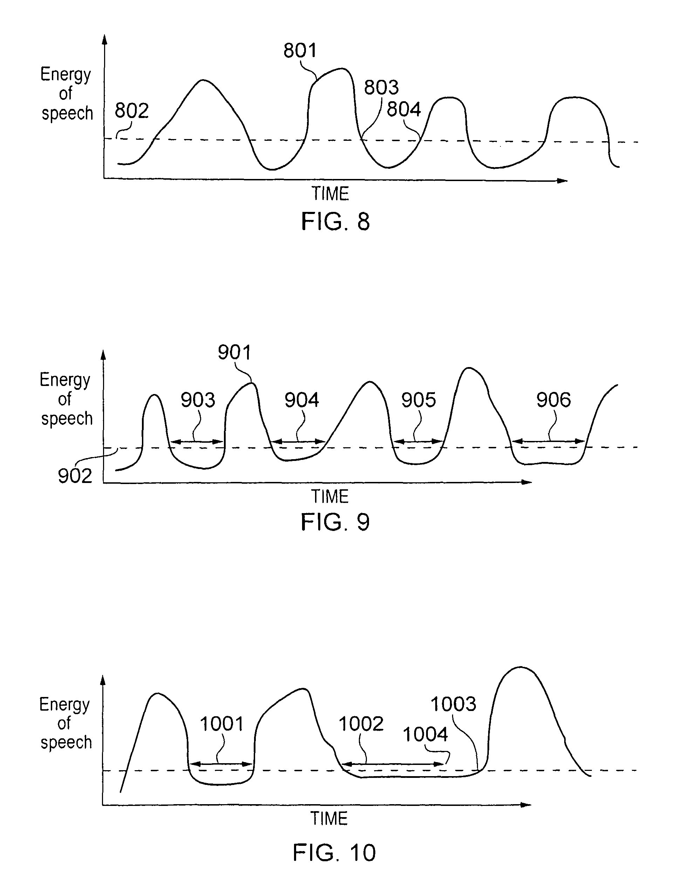

For this operation to work well, the modification apparatus 401 will have to be aware of the types of recognition being requested and to modify its behaviour to suit particular types of response. For example, if the caller is asked to speak a sequence of isolated words or letters or numbers, then it would be expected that there would be a clear pause between each word. If the energy of the speech signal is measured during the response, a short term energy waveform can be produced, as shown in Figures 8 to 11, and described in more detail in Example 9 below. Typically, the short term energy of the speech is calculated using a sum similar to this:

$$energy_i = \frac{1}{N} \sum_{j=0}^{j=N-1} x_{i+j}^2$$

Where i is the speech sample of interest, N is the number of samples over which to calculate the short term energy, typically 80 samples for an 8kHz speech signal. The resulting waveform is of the form in figure 8, line 801. The waveform will rise whenever the caller is talking and will fall whenever they are silent. Generally, there are other sources of noise in the background, so the energy waveform rarely drops to zero during periods when the caller is silent. When using an energy waveform of this type, it is possible to set an energy threshold, line 802, which is used to distinguish between caller speech, when the energy waveform is above this energy threshold, and caller silence, when the energy is below this threshold. Thus, point 803 is a point when the caller is determined to have stopped speaking, and the energy falls below the threshold, while point 804 is a point when the caller starts to speak again, resulting in the energy rising above the threshold. Thus, this energy waveform would be expected to show a pulse of energy corresponding to each word, letter or number that is uttered with a low or zero energy period between each pulse indicative of a pause between each word. With the knowledge that the current recognition will likely produce these pauses, the modification apparatus 401 calculates a typical range of durations of these pauses for the caller. Once this typical range of durations of pauses is known, the modification apparatus can calculate how long it should wait after an utterance before the result should be returned. This length of time will be calculated to ensure that there is a high probability that the caller has finished speaking before the result is returned. The modification apparatus modifies the command signal accordingly. The end result is that the length of time is lengthened for slow speakers and is shortened for fast speakers. Where a database is included, as will be described below, the typical range of durations of pauses can be added to it and used in future similar recognitions. If the recognition was for a different style of question, such as a date of birth, then it is unlikely that there will be pauses between the words, and the modification apparatus would be unable to calculate the typical range of pauses for future use.

With this in mind, how this example applies to the first embodiment shown in Figure 4 is described in the situation where a caller wishes to give his utility supplier a meter reading. The controlling application 402 begins by asking the caller to read his customer reference from his most recent bill. This will allow the system to identify the caller. The caller will then speak his customer reference, one character at a time. To start with, the controlling application generates a command signal 405 which is a default command signal. The speech recognizer 403 receives an unmodified command signal which directs it to recognize the speech as a sequence of alphanumeric characters, each separated by a space. In this case, the default command signal indicates that the speech recognizer must wait for one second after the caller has finished talking before returning the results back to the controlling application 402.

The controlling application 402 directs the speech from the caller to the speech recognizer 403 via the modification apparatus 401. The speech recognizer 403 works to recognize the speech while the modification apparatus 401 monitors the energy of the speech signal which will have a waveform similar to that shown in Figure 8. The high energy regions of this waveform correspond to periods in time when the caller is speaking, whilst the troughs corresponds to periods when the caller is silent. It will be seen that four distinct words are said by the caller during the time of the waveform. The troughs represent the spaces between consecutive words. To achieve this, the modification apparatus 401 includes a speech signal measuring device (not shown in Figure 4) which measures the short term energy waveform, using any commonly understood algorithm. The speech signal measuring device also uses a speech/silence energy threshold 802 to identify the portions of the speech signal that are deemed to be speech and the portions which are classed as silence. Point 803 on the energy waveform in Figure 8 is a point in time at which the modification apparatus determines that the caller has stopped talking, while point 804 is a point in time at which the energy rises above the speech/silence threshold and the modification apparatus determines that the caller has started to talk again. In Figure 9, this waveform has been extended to provide clear periods of silence between the words. The waveform now shows four distinct peaks, plus a further half peak to show that speech is still being received. The time intervals between the various peaks, 903, 904, 905 and 906 are highlighted as they are important to the algorithm. Each of these time intervals represents a period of silence between two periods of speech from the caller. The speech signal measuring device monitors the duration of these intervals, and uses them to calculate a modified period of time after which the recognition result is returned to the controlling application 402 by the speech recognizer 403. However, before the modified period of time is used, the system relies on the default value of one second. If, at any time, a whole second elapses after an utterance, the speech recognizer 403 will return the recognition result to the controlling application 402 via the modification apparatus 401.

If, subsequent to the recognition result being returned to the controlling application 402 the caller continues to speak, the speech recognizer 403 can continue to recognize the additional characters and, when a full second elapses again without the caller speaking again, this further result can be returned to the controlling application 402 and added to the original result that was returned to it. At this point, the spaces between the individual utterances during the recognition process can be analysed. If the caller is a fast speaker, the spaces will be relatively short, and if the caller is a slow speaker, the spaces will be relatively long. For a fast speaker, the modification apparatus is arranged so as to modify the command signal 405 from the controlling application 402 for recognitions of this type so that the processed command signal 407 specifies a shorter time before the results are returned to the controlling application 402. For a slow speaker, the time will be lengthened. In this way, the system becomes much more acceptable to a fast speaker who is not penalised by having to wait for a full second before his final utterance is accepted, and a slow speaker will find the system more acceptable because there is a smaller chance of the system accepting future replies before he has finished speaking them.

Once the account number has been entered and has been validated, the caller is then asked to give the meter reading, which is another series of alphanumeric characters. Since the modification apparatus has changed the command signal received by the speech recognizer, the speech recognizer 402 is able to operate in a much more customised way compared with the earlier step of reading the account reference. Consequently, the experience of the caller will be much improved.

**Second Embodiment:**

The example given above is very effective in improving the experience of the caller. However, it does not customise the actions of the speech recognizer 403 until the second recognition. The first recognition, in that example the recognition of the account reference, is carried out under the default arrangement.

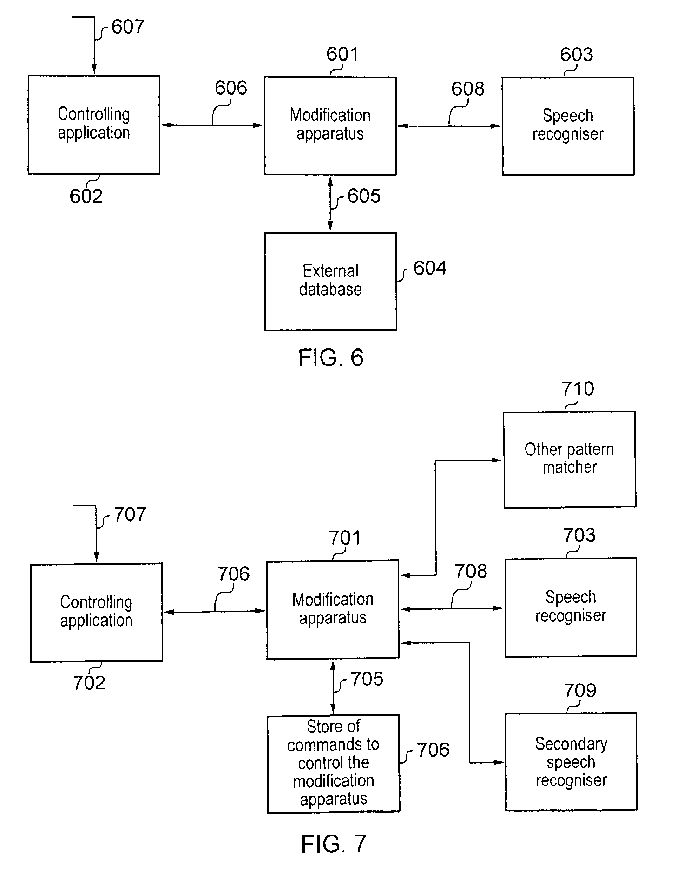

The embodiment shown in Figure 6 is similar to that shown in Figure 4 except that it also includes an external database 604 connected to the modification apparatus by a data connection 605. The database permits the storage of information about the caller, for example, the appropriate period of time to wait after an utterance before the speech is returned to the controlling application. This allows the system to operate in a customised or modified way right from the start of a future call, or from an earlier point in such a call. The system includes a controlling application 602, a modification apparatus 601 and a speech recognizer 603. The controlling application 602 and the modification apparatus 601 are connected by a first signal line 606 and the modification apparatus 601 and the speech recognizer 603 are connected by a second signal line 608. The first signal line 606 conveys the command signal, the speech signal and the processed speech result shown in Figure 4. The second signal line 608 conveys the processed command signal, the processed speech signal and the speech result signal. That is to say, the first signal line and the second signal line each contain the corresponding three signals in Figure 4. Figure 6 simplifies how those lines are represented.

The external database 604 can be any suitable database constructed in any suitable way. In this particular embodiment, however, the database contains customer information which is specific to the particular caller, and in particular contains information on how the modification apparatus 601 should behave to make the system work better or to make the caller's experience better. Information can include passwords and personal identification numbers. This is because the information is pertinent to the caller alone, and therefore the personal information should logically be stored together or the pieces of information should at least be related to each other in the database.

**Example 2: Modification of commands before presentation to the recognizer using database:**

Using the example of leaving a meter reading, as described in Example 1 above, if it is determined during a call that a caller is a fast speaker or slow speaker, and that the length of the pause after the caller stops speaking should be modified, that modified value can then be stored in the external database 604 together with other customer specific information. That way, in subsequent calls, once the caller has been identified, the appropriate value of the pause can be retrieved from the database 604 by the modification apparatus 601 and the modification apparatus can then direct the speech recognizer 603 to operate in a modified way using the more appropriate pause. The method by which the most appropriate period of time is determined can be the same as that used in Example 1, and so will not be repeated here. That period of time can then be stored in the database for use in future calls, as well as later in the call in which the time period is determined. Even in subsequent calls, the time period can be measured to further refine the time period stored in the database.

Of course, this example of the use of the database 604 is in respect of one particular recognition type, that of a sequence of alphanumeric characters. The database could also hold various other modifications which the modification apparatus 601 can apply to the speech recognizer 603 or to the speech signal or to the speech result signal, based on earlier calls made by the caller. Thus, it will be appreciated that the user's experience of using this system will be significantly improved.

**Example 3: Use of External Information:**

There are many particular recognitions in which access to a separate and additional source of information might yield a better recognition result than can be achieved by the recognizer alone.

For example, when requiring a caller to give their name and address, the application might first of all ask for the caller's address. With this knowledge, it would then ask for the caller's name. However, databases exist that contain information about the likely names of the occupiers of a particular address, this information is not perfectly accurate, but can be used as a "hint" towards the likely name of the caller. To achieve a good level of recognition accuracy, an application might first perform a speech recognition against a small database holding the most likely names of the caller, and then use a much larger database of names covering all of the names in the country. However, with this invention, both of these recognitions can be performed in a single dialogue turn if the modification apparatus identifies the request from the controlling application to perform this request in a series of different requests that are themselves controlled by the results of prior recognitions and searches through the external name database.

To be clear, for this example, the controlling application believes that it knows the name of the caller, based upon the database of names and addressees that are available to it. To therefore confirm the name, in a conventional system, the application would have to ask the caller for their name and compare the result against the name that was returned by the database. If there was not a match, the application would then have to ask the caller for their name again, but this time instruct the recognizer to compare the speech against all the names in the country. This would require two dialogue turns, each of which must be recognized. The application would be unable to use just a single recognition as the recognition accuracy for the recognition against all of the names in the country will deliver quite a poor performance.

However, the second embodiment shown in Figure 6 would be able to intercept the request for a name recognition, would be given the hint of the name by the controlling application and would be able to perform both recognitions upon the same utterance in a single dialogue turn. This improves the caller's experience of the overall system and reduces the time taken to complete the call.

In Figure 6, the controlling application, 602 issues command signals to the modification apparatus, 601. Before these command signals are forwarded to the speech recognizer, 603, the modification apparatus 601 might decide to consult the information in the external database, 604, and to apply a different method of controlling the speech recognizer 603 than the one specified by the controlling application 602. When the results of the recognition are returned to the modification apparatus 601, the apparatus might again consult the external database 604, and perhaps issue further speech recognition requests in the form of processed command signals, using different configurations to the speech recognizer 603. The results would be used, in conjunction with the results previously received from the recognizer 603 to produce a final set of results which are returned to the controlling application 602.

Thus, there might be multiple recognition requests issued by the modification apparatus 601 to the speech recognizer 603 based upon a single recognition request from the controlling application 602. The algorithm being executed in the modification apparatus 601 determines which result from the recognitions that have been performed on the utterance should be returned to the controlling application 602. Generally, the result returned will be from the last recognition. This is because the structure of the algorithm will usually be one in which the most likely recognition result is arrived at through a series of error reducing steps. However, it may be the case that some recognitions are just used to confirm the actual result, which might come from a recognition which is not the last one.

**Example 4: Store the speech for later reuse:**

In known systems, a common dialogue between a caller and the controlling application of the voice recognition system to identify the caller's address might proceed as follows:

| System: | Please tell me your postcode |
|---|---|
| Caller: | CB4 6AW |
| System: | Please tell me your street name |
| Caller: | Cambridge road |

(continued)

| | |
|---|---|
| | |

At this point, the system attempts to confirm to the caller the postcode that was recognized, but the postcode recognition operation has make a mistake:

| System: | Is your postcode CV4 6AW? |
|---|---|
| Caller: | No |
| | |

Now, the application has to start the dialogue again, asking for the postcode and street name:

| System: | Please tell me your postcode |
|---|---|
| Caller: | CB4 6AW |
| System: | Please tell me your street name |
| Caller: | Cambridge road |
| System: | Is your postcode CB4 6AW? |
| Caller: | Yes |

In this dialogue, the caller has spoken their street name "Cambridge Road" twice. Not only does this waste time, but requires the system to recognize things which need not be recognized. Further, the caller is likely to feel frustrated if he has to repeat everything just because one piece of information has been recognized incorrectly.
In the second embodiment of the invention, the modification apparatus 601 not only conveys the speech signal to the speech recognizer, but also to the external database 604. As a consequence, the modification apparatus 601 has access to a stored copy of the entire speech from the caller such that it might be used later in a different recognition.
In this example, when the controlling application 602 first receives the street name, it instructs the modification apparatus 601 to store it in the database 604, and then, should it become necessary for it to be recognized again, that stored version can be retrieved and recognized again without having to ask the caller for it a second time. This will result in the following dialogue:

| System: | Please tell me your postcode |
|---|---|
| Caller: | CB4 6AW |
| System: | Please tell me your street name |
| Caller: | Cambridge road |
| System: | Is your postcode CV4 6AW? |
| Caller: | No |
| System: | Please tell me your postcode |
| Caller: | CB4 6AW |
| System: | Is your postcode CB4 6AW? |
| Caller | Yes |

This dialogue has achieved the same task as the original one, but has spared the caller the need to say their street name twice. The effect of this will be to significantly improve the caller's experience of the dialogue whilst simultaneously reducing the time required to complete the dialogue.
In this example, the command signals are being used to direct the modification apparatus to carry out an extra function in storing the utterances. If that utterance is required for recognition again, the modification apparatus can retrieve it from the database 604 and supply it to the speech recognizer for recognition again.

To achieve this, the first utterance from the caller is the postcode. The second utterance is the street name. The controlling application 602 sends both of these utterances to the modification apparatus 601 as speech signals, but also sends a command signal 605 to the modification apparatus instructing it to store the second utterance in the external database 604. The modification apparatus 601 directs both of the utterances to the speech recognizer, directs the second utterance to the external database 604, and receives the results in the form of a speech result signal. The modification apparatus 601 directs the results back to the controlling application in the form of the processed speech result signal. When the controlling application 602 discovers that the postcode has been recognized incorrectly, it requests a repeat of the postcode from the caller which is the third utterance. This is sent to the modification apparatus as a speech signal together with a command signal instructing the modification apparatus to retrieve the second utterance from the external database 604 for processing by the speech recognizer. The modification apparatus 601 sends the third utterance to the speech recognizer 603, retrieves the second utterance from the external database 604 and sends that to the recognizer for recognition again. The results of the recognition of the third utterance and the second utterance are then returned to the controlling application. Thus, the second utterance has been recognized twice with the caller only having to say the street name once.

In a modification to this example, instead of using an external database 604, the speech might be stored within the recognition system. It will be recalled that this system is executed on a computer, and the memory within the computer might be used to store the speech, particularly if it is only intended to store it for a short time, for example for the duration of the call. The longer that the speech needs to be stored, the more appropriate it is to use an external database which, in the case of the second embodiment is shown in Figure 6, is structured so as to keep all information relating to a caller together, or related to each other so that it can be accessed in future by using the caller's identification. Thus, if a database is not required, this example could be carried out by the apparatus shown in the first embodiment in Figure 4.

**Example 5: Specialized handling of packets**

In conventional modern speech recognizers, the speech is transferred from the controlling application to the speech recognizer in a sequence of short packets. Typically, each packet might contain 20ms of speech, and to ensure that each packet is processed in the correct order, it has associated with it a sequence number. Packets with numerically adjacent sequence numbers contain speech that is adjacent. Such a transmission of speech could be of the type referred to as Voice Over IP. This method of transmission is particularly vulnerable to certain types of error that are not present in continuous transmission techniques. In particular, some packets might never be received by the recognizer, while other packets might be digitally corrupted and so contain distorted speech. Corruption might be due to a transmission-based corruption or by the presence of high levels of background noise in the packet. Transmission based corruption can frequently be determined because the packet checksums and other error identification and correction information are signalling that an error has occurred, while high background noise levels can be computed by the apparatus itself.

In the present invention, the effect of missing and corrupted packets can be reduced. This will be described in conjunction with the first embodiment shown in Figure 4. The speech signal 406 is in the form of a series of packets directed towards the modification apparatus 401. Each packet is stored in a data store which is expected to be the internal memory of the computer on which the speech recognition system is executing, and the modification apparatus 401 stores the location of all missing or distorted packets. Thus it might produce the following table for each packet:

| Packet number | Time | Noisy | Corrupted |
|---|---|---|---|
| 1 | 0ms | No | No |
| 2 | 20ms | No | No |
| 3 | 40ms | No | No |
| Etc. | | | |

The speech signal is passed on to the speech recognizer 403 by the modification apparatus 401 When the result of the recognition is returned by the speech recognizer 403, the modification apparatus 401 determines whether the words that were recognized during the time period that spanned the missing or distorted packet were important words, and if they were, they are marked as being most likely to be misrecognized. The controlling application 402 then modifies its dialogue to concentrate on those parts of the utterance during the following dialogue steps. The position of missing or distorted packets in the speech can be accurately determined because the packets are of a defined length, and so the position of the packet can be used to identify the point in time at which the packet is lost. For example, the received packet sequence might be 1, 2, 3, 5, 6. Packet 4 has been lost, and the timing information in packets 3 and 5 can be used to exactly determine the point in time that packet 4's speech contained. This can be correlated with the recognized speech.

When the recognition results are returned by the recognizer. The recognizer will usually be able to accurately timestamp each word in the recognized sentence. For example, if the recognized sentence was "I want to pay thirteen pounds" The information returned might be:

| Word | Start time |
|------|-----------|
| I | 100ms |
| Want | 400ms |
| To | 600ms |
| Pay | 900ms |
| Thirteen | 1200ms |
| Pounds | 1500ms |
| END | 1800ms |
| | |

In this example, by comparing the contents of the packet information table and the timings of the words, the apparatus can determine if there is any distortion or packet loss in the packets corresponding to, for example, the time 1200ms-1500ms, which is the time period the word "thirteen" was spoken. If the apparatus finds that there is indeed some noise, packet loss, or packet corruption during this period, then it can signal this information back to the application by alerting the application that the word "thirteen" is unlikely to be correctly recognized

As an example: A caller is asked by the controlling application 402 to say an amount of money, to which he replies "thirteen pounds". For speech recognizers, the word "thirty" is very confusable with word "thirteen", as they differ only in the last syllable. The modification apparatus 401 tracks which packets were missing in the incoming stream of packets, which it does by monitoring the sequence number for each packet, and because the speech recognizer 403 returns the location of each word in the recognized sentence within the speech stream, the modification apparatus 401 is able to determine whether any packets that were used to recognise the word "thirteen" were lost or distorted. If the modification apparatus 401 determines that some packets within this word were lost or distorted, then this information is returned back to the controlling application 402 as extra information, possibly in the form of a word confidence score.

Upon receipt of this extra information, the controlling application might determine that, because the word "thirteen" is a very import word to recognise correctly, some specialist confirmation dialogue would be required, perhaps a question of the form "was that one three pounds or three zero pounds?"

The controlling application must, of course, be able to identify important words and distinguish those from words which are not important. To do this, it includes a table of important words which it refers to for this purpose. For example, if the phrase "I want to pay my bill" is recognized, then the application will know that the only words of substantive meaning are "pay" and "bill". The words "I want to" could be substituted with many alternatives such as "can I" without affecting the meaning of the phrase. The important words are normally referred to as "high information content" words. There are many other high information content words which would be contained within the table, depending on the context of the dialogue. For financial transactions, it is necessary to include, amongst other things, numbers.

It is also the case that some words in the recognized sentence contain little information, and can readily be distorted without changing the meaning of the sentence. For example, should the caller say "thirteen pounds please", and the apparatus determines that the word "please" was recognized within a period of noisy, distorted, or omitted speech, then while the apparatus would mark the word "Please" with a low confidence of correct recognition, the controlling application might determine that, as the word "Please" contains no semantic information in this context, it will not ask the caller a further clarification question.

This analysis of the incoming speech stream and comparison of the location of packet errors to the segmentation information returned by the speech recognizer 403 is not limited to missing packets, but can also be used for packets that the modification apparatus 401 determines contain noisy speech or errors.

**Example 6: Multiple recognitions of same single utterance using different grammars:**

There are some dialogues that, in existing voice recognition systems, have to be constructed to make the task of performing the recognition simpler for the recognizer. These constructions are generally not the type of construction that would be used in a human-human dialogue, but without them the recognition accuracy would be very poor.

An example of this would be a dialogue to find out a caller's address. A typical example dialogue might be:

| System: | Please tell me your postcode |
|---------|------------------------------|
| Caller: | CB4 6AW |
| System: | Please tell me your street name |
| Caller: | Cambridge road |
| System: | Please tell me your house number |
| Caller: | 16 |

In this dialogue, the caller has been asked to split up the first line of their address into two parts "16 Cambridge Road" becomes "Cambridge Road" and then "16". Some callers will find this approach confusing as it is not the approach used in human-human communication.

The present invention is able to give a much more natural dialogue. This will now be described in conjunction with the first embodiment in Figure 4, in which it is possible to achieve the following dialogue:

| System: | Please tell me your postcode |
|---------|------------------------------|
| Caller: | CB4 6AW |
| System: | Please tell me the first line of your address |
| Caller: | 16 Cambridge Road |

In this example, the "16 Cambridge Road" utterance is directed by the controlling application 402 to the modification apparatus 401. The modification apparatus 401 directs the speech signal to the speech recognizer 403 for initial processing and also stores the speech in the memory of the computer executing the system. The modification apparatus 401 also sends a processed command signal 407 to the speech recognizer 403 directing it just to recognize the name of the road "Cambridge Road". Once the name of the road has been identified, the result is returned to the controlling application 402, and the modification apparatus 401 retrieves the stored speech signal from the memory and sends it to the speech recognizer 403 again together with a further processed command signal 407 to the speech recognizer 403 instructing it to carry out a subsequent recognition on the stored speech signal so as to recognize the number of the house. Once the subsequent recognition has taken place, the result is returned to the controlling application 402 via the modification apparatus at 401.

This style of dialogue is more natural than the conventional style and would become possible using the modification apparatus 401 without having to resort to complicated grammars, which would in turn lead to poor recognition accuracy.

**Example 7: replace requested grammar with a different, more suitable one**

Known speech recognizers use grammars to control the order of words that they are allowed to recognize. As an example, it is common to create grammars that include frequently used "start-up" and "close-down" phrases. A start-up phrase is one that prepends the real content of the utterance and contains no information. Thus such phrases as "I would like to", and "can I" would be start up phrases. A "close-down" phrase is a phrase that commonly follows on from the real content of the utterance, and again contains no information. The most common close-down phrase is "please"

The introduction of these extra start-up and close-down phrases can significantly increase the recognition accuracy during the call, however, it is also the case that they can decrease the accuracy for other calls if they do not match well the phrases that the caller is actually using.

The present invention reduces the decrease in accuracy mentioned above. This example will now be described in respect of the second embodiment in Figure 6 in which the controlling application 602 sends a command signal 605 directing the use of a particular grammar to be used to control the recognizer 603 for the recognition of a speech signal 606. The modification apparatus 601 is used to identify that a different grammar would be more appropriate based upon either information extracted from the results of previous calls, from an additional external database 604 as described in example 2 above, or from earlier utterances within that call. The different grammar is used to guide the recognition task more effectively than would be the case with a more general grammar. While an external database 604 is used in this embodiment, it might be possible to hold the same information within the memory of the computer executing the system.

In this example, during dialogues with a caller, various characteristics of the caller's speech will be identifiable. With a new, unidentified caller, their characteristics will not be known, and so a default grammar will be used by the speech recognizer, as directed by the controlling application 602. This default grammar will include a wide range of words, including many start-up and closedown phrases. However, after an amount of dialogue, the system may recognize that the caller does not use start up and closedown phrases. If this is identified by the system, the modification apparatus 601 can modify the control signal to the speech recognizer 603 so that the speech recognizer 603 is directed to use a smaller grammar which does not contain start-up and closedown phrases, or at least includes many fewer of them. Consequently, because the grammar is smaller and is more appropriate to the dialogue, its accuracy will be expected to be higher than for a much larger grammar containing the start-up and closedown phrases.

This characteristic of the caller not to use start-up and closedown phrases can also be stored in the external database 604 in the same way as is described with respect to the characteristic in Example 2 above. This means that, when the same caller telephones again, the system will use the most appropriate grammar, in this example the one without the start-up and closedown phrases.

Variations on this method are possible as the apparatus tracks the results of previous utterances It can determine from them that the caller is unlikely to use either start-up or close-down phrases, and then eliminates these types of words from the grammar before being used for subsequent recognitions, which in turn would deliver a higher recognition accuracy. This is normally achieved by selecting a different grammar altogether rather than modifying the contents of the default grammar.

The grammar replacement operation could also work in the opposite fashion. If the caller was observed to introduce a number of start-up and close-down phrases into their responses, but the specified grammar for this recognition failed to account explicitly for those phrases, then the apparatus can introduce them into the grammar. Generally, start-up and closedown phrases can be added without much difficulty to the requested grammar and will dramatically increase recognition accuracy. The challenge is to identify which phrases are most likely to be needed. The best way to identify them is to record the same caller's behaviour during their calls to the system, and to use this recorded information in future dialogues with the system when determining whether or not to introduce start up and close down phrases to grammars that don't explicitly specify them.

**Example 8: replace requested grammar with a different, more suitable one**

Like Example 7, this example again uses the second embodiment shown in Figure 6. Also like example 7, this example allows the grammar to be changed by the modification apparatus 601 depending on the characteristics of the caller. In this example, the characteristics of the caller relates to the caller's country of citizenship or residence. If the citizenship or country of residence of a caller is known, for example from caller profile information on the external database 604, then the modification apparatus 601 can select an appropriate grammar. If the caller is identified as a citizen of one country, for example the United Kingdom, who is calling into an application designed for United States of America users, a British English grammar can be selected by the modification apparatus 601 instead of the default grammar specified by the controlling application 602. During this call, the caller might be asked for their date of birth. It is common in the United Kingdom to say dates with the month name following the ordinal, as in "the thirteenth of June", but this ordering is uncommon in American English and the default grammar might not allow this ordering of words. Therefore, the apparatus might replace a grammar tailored for American speakers with one tuned for British speakers

Consequently, not only will be system be much more acceptable to the caller in this instance, but the accuracy of the system will also be significantly enhanced.

**Example 9: Continuously monitor the incoming speech to allow the apparatus to adapt to the caller's speaking style:**

This example takes advantage of the modification apparatus's ability to store the speech as it is being received and can re-send the speech to the recognizer any number of times. It will now be described with reference to the second embodiment shown in Figure 6 in which the controlling application 602 directs a speech signal to the modification apparatus 601, and this is passed on to the speech recognizer 603. The modification apparatus 601 is connected to the external database 604 by a data connection 605.

One of the major problems with spoken dialogue systems lies in the difficulty of configuring the application to optimally cope with the current caller's speaking style.

As an example, callers vary greatly in their speaking rate, and for each recognition, the speech recognizer in most systems does need to be configured to allow a period of silence after the caller has finished speaking to elapse before the recognizer considers that the caller has indeed stopped speaking. The optimal value for this varies considerably from one caller to another. The solution usually taken by known systems is to allow a relatively long period of silence to elapse before the recognizer will cease waiting for the caller. The effect of this long period of silence is that the overall dialogue appears to be very sluggish for fast talkers, and so reduces the quality of the experience they receive from the application.

An alternative approach is for the modification apparatus to ignore long end silence requests from the application and to replace them with a variable end silence figure that is under its own control. This is the approach taken in Example 1. In this example, however, the modification apparatus 601 stores the speech from the caller in the external database 604, and can determine how much of the stored speech should be sent to the speech recognizer 603 in one go, and when it should be sent. It can send varying amounts of speech to the recognizer 603 for recognition, but can later choose to abandon those recognitions, should the need arise because the caller has unexpectedly continued to speak.

For example, consider the task of recognising a sentence of unknown length, perhaps after the caller has been asked to spell their name. For this application to successfully capture the whole of the sentence, the recognizer 603 is be configured to wait for a long, reasonable, time after which it considers that the caller has stopped talking before a result can be returned. This long delay will, however, penalize the faster talkers, who will perceive the application to be running very slowly.

The modification apparatus 601 is configured for such recognition tasks so as to perform its own calculations concerning the likely periods of time when the caller was speaking and when the caller was silent. Based upon the durations of these periods, it instructs the recognizer to behave differently according to the different speaking rates of the caller. Figure 8 is a short term energy waveform showing the energy of the speech signal. The high energy regions of this waveform correspond to periods in time when the caller is speaking, whilst the troughs correspond to periods when the caller is silent. It will be seen that four distinct words are said by the caller during the time of that waveform. The modification apparatus 601 includes a speech signal measuring device (not shown in Figure 6) which measures the short term energy waveform, using any commonly understood algorithm, 801. The speech signal measuring device also uses a speech/silence energy threshold, 802, to identify the portions of the speech signal that are deemed to be speech and the portions that are to be classed as silence. Point 803, on the energy waveform, is a point in time which the modification apparatus determines that the caller has stopped talking, while point 804 is a point in time when the energy rises above the speech/silence threshold and the modification apparatus determines that the caller has started to speak again.

In Figure 9, this waveform has been extended to provide clear periods of silence between the words. The waveform now shows four distinct peaks, plus a further half peak to show that speech is still being received. The time intervals between the various peaks, 903, 904, 905 and 906 are highlighted as they are important to the algorithm. Each of these time intervals represents a period of silence between two periods of speech from the caller. The speech signal measuring device monitors the duration of these intervals, and should one exceed a specified threshold, as is shown in Figure 10 in which the time interval between the second and third peaks exceeds the threshold 1002, the apparatus sends the complete speech waveform that has so far been received and stored in the external database 604 to the recognizer 603 for it to carry out a recognition. Simultaneously, while it is waiting for the recognition results, it is also monitoring the energy waveform to determine if the caller begins to speak again, and continues to record the speech signal. If the caller begins to speak again, as shown with the third peak in Figure 10, then the recognition that is in progress is abandoned and the speech signal measuring device waits again for the silence after the last piece of speech to again exceed its threshold.

In Figure 10, the energy waveform initially falls below the speech/silence threshold for the period of time 1001. However, this period of time does not exceed the threshold that the modification apparatus 601 uses to begin sending speech to the recognizer 603. After the second period of speech, the energy waveform again falls below the speech/ silence threshold, but this time, after the period of time 1002, the apparatus determines that the caller might have indeed stopped talking and therefore sends the speech from the beginning up to point 1004 to the recognizer 603 for recognition. This recognition takes a finite amount of time, during which the modification apparatus 601 continues to monitor the energy of the speech and continues to record the speech signal in the external database of 604. At the point 1003, the energy again rises above the speech/silence threshold. At this point, the modification apparatus 601 signals to the recognizer 603 to abandon the recognition, or if the recognition is complete, the results are abandoned, and the apparatus again waits for the silence period to exceed its threshold.

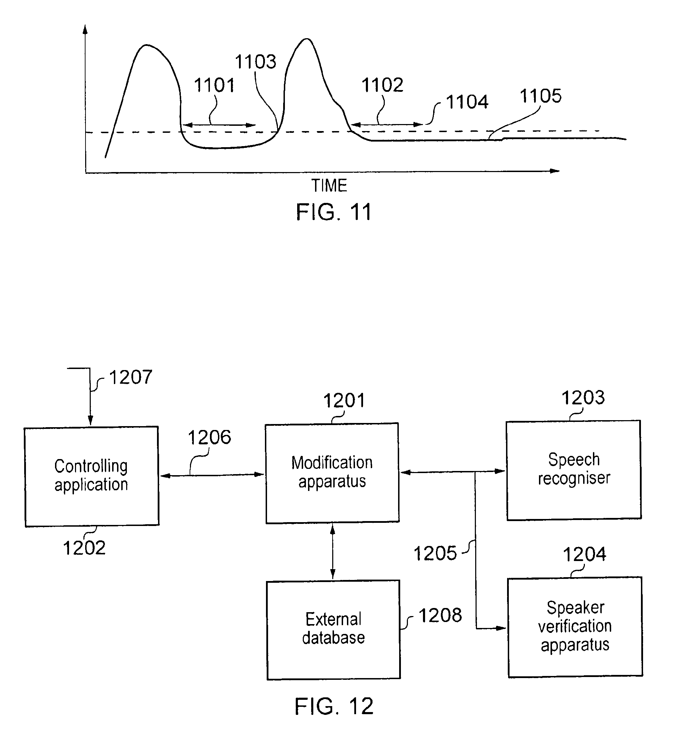

If it is the case that after a longer period of time, the caller has not spoken any more words, then the result from the recognizer 603 that has been already recognized can be returned to the application. This is shown in Figure 11.

In Figure 11, the first period of silence, 1101, is sufficiently long to cause the modification apparatus 601 to submit the speech waveform to the recognizer 603 for processing, however at point 1103, the caller begins speaking again, and so the results of the recognition are abandoned. At point 1104, the second period of silence is again sufficiently long to cause the modification apparatus 601 to send the whole of the speech waveform to the recognizer 603 for processing. This time, no further speech is received before point 1105. At this point, the recognition results can be returned to the controlling application 602.

The operation of the modification apparatus 601 in this example demonstrates that it is possible to reduce perceived delays in speech processing for faster speakers whilst simultaneously accommodating the speaking rate of slow talkers.

**Third Embodiment: Simultaneous text independent speaker verification and speech recognition:**

There is currently emerging the requirement to perform speaker verification processing upon a caller's speech. There are two kinds of speaker verification, text dependent and text independent. Text dependent verification requires the caller to speak particular words and phrases, from which the verification calculation is performed. Text independent verification is performed using any speech from the caller. There are advantages and disadvantages to both methods. This embodiment is concerned with text independent verification.

For text independent verification, the caller's speech is accumulated over a number of individual utterances. When sufficient material has been collected, the accumulated speech can be processed by a speaker verification algorithm and the result returned to the application. This processing operation is usually performed as an explicit operation in the dialogue and tends not to integrate smoothly with the call flow.

Figure 12 shows a recognition system, most of which is the same as that shown in Figures 4 and 6. The system includes a controlling application 1202 which receives speech 1207 from a caller or speaker and directs a speech signal to the modification apparatus 1201. Between the controlling application 1202 and the modification apparatus 1201 is a first signal line 1206, which is equivalent to the first signal line 606 in Figure 6. The system further includes a speech recognizer 1203 which is connected by a second signal line 1205 to the modification apparatus 1201. The second signal line 1205 also connects to a speaker verification apparatus 1204. An external database 1208 is also included connected to the modification apparatus.

The modification apparatus 1201, is able to modify the flow of this verification operation to make its operation transparent to the caller. This is performed by the controlling application 1202 instructing the modification apparatus 1201 to store all of the speech that has been received during the dialogue in the database 1208. The modification apparatus 1201 can communicate at any time with the verification apparatus 1204, passing all of its accumulated speech to it. In addition, the caller's claimed identity needs to be passed from the controlling application 1202 to the modification apparatus 1201. This claimed identity passing is accomplished in the same way as the configuration instruction is passed between the controlling application 1202 and the modification apparatus 1201.

To make the verification operation transparent to the caller, the modification apparatus 1201 is directed to pass the verification results back to the controlling application 1202 simultaneously with any recognition results that are returned by introducing some extra semantics into the result package. This means that the controlling application 1202 can determine the current status of the verification calculations at any time without the need to perform explicit verification stages. The use of text independent speaker verification techniques in this embodiment requires the controlling application, 1202, to have a number of dialogue turns with the caller, and each dialogue turn's speech will need to be stored in the database 1208 for use with the speaker verification algorithm. This is because current text independent speaker verification algorithms require more speech to perform the calculations than is usually given in a single utterance. Typically, the speaker verification apparatus 1204 executing the speaker verification algorithm will need at least 5 seconds of speech to begin processing and would ideally use much more speech to provide good performance.

Thus, in this embodiment, the simultaneous verification and recognition operation is expected to use the controlling application 1202 to ask the caller to identify themselves. Typically this identification might be through the use of an account number. The identification utterances of the caller will be stored by the modification apparatus 1201, but not used straight away for speaker verification. They will be used for verification when the caller's identity is confirmed through the use of some kind of secondary information, such as a PIN or password. Once the controlling application 1202 has the caller's identity, this information is passed to the modification apparatus 1201. At this point, the modification apparatus 1201 will be able to perform speaker verification upon the recorded speech. It will pass the customer identification information to the speaker verification apparatus 1204, along with the already recorded speech. The speaker verification apparatus 1204 will process the speech and return its results, which will include some level of confidence that the caller speaking the words is, indeed, the same caller with whom it has associated a speaker verification model to the given caller identification information, to the modification apparatus.

This verification operation will take place in parallel to the continuing dialogue the caller is having with the speech recognition system. The advantage of this parallel operation is that speaker verification apparatus 1204 executing the algorithms will take time to calculate their results, and without a parallel recognition and verification operation, the caller would have to wait at some point in the dialogue for the verification to be completed. This waiting time will be unnatural to the caller, and will cause the caller to question the robustness of the dialogue, which undesirable. The results from the verification operation can be transferred to the controlling application 1202, at any time. The most convenient method is to transfer the results at the next opportunity when some recognition results are also being returned to the controlling application 1202.

After the controlling application 1202 has provided the modification apparatus 1201 with the claimed identity of the caller, all following utterances can also be used for verification using the same parallel processing manner described above, with their results also being returned to the controlling application 1202 at the next opportunity.

By constructing a speech recognition apparatus in this way, it is possible to perform speaker verification in the dialogue without the verification process being apparent to the caller.

**Fourth Embodiment: Combining more than one of these specific implementations:**

From the foregoing, it will be appreciated that the first embodiment is the simplest arrangement of this invention, and that the second and third embodiments, whilst being based on the first embodiment, include features which enhance the functionality of the modification apparatus. All of the examples which operate on the first embodiment will also operate in the second and third embodiment. Some of the embodiments described in connection with the second embodiment in Figure 6 might also operate on the system shown in the first embodiment, provided that sufficient memory is available to be system. In some cases, the computer system on which the recognition system is executed might have sufficient memory to avoid the use of an external database. In addition, it will be appreciated by the reader that, although individual examples have been described in isolation from each other, more than one of these examples can be combined to increase functionality in multiple areas.

To achieve enhancement in the operability of the recognition system, Figure 7 shows a fourth embodiment of the invention. As with the other embodiments, the core of the system includes a controlling application 702, a modification apparatus 701 and a speech recognizer 703. The controlling application 702 conducts a dialogue with a speaker or caller and receives the caller's speech 707. A first signal line is located between the controlling application and the modification apparatus 701. A second signal line 708 is located between the modification apparatus 701 and the speech recognizer 703. A store of commands to control the modification apparatus 706 is connected to the modification apparatus 701 by a data connection 705. The store might be an external database, or memory within the computer system executing the voice recognition system. The modification apparatus is also connected to another pattern matcher 710, as well as to a secondary speech recognizer 709. The modification apparatus is not limited to applying one of its specific functions to the speech recognition operation, but would be able to apply as many of the as might be necessary. To achieve this functionality a command interpreter (not shown) is included within the modification apparatus 701 that will have available to it a variety of stored programs that can be activated by the controlling application 702 by issuing a specific command to the modification apparatus 701 to perform the required operations. This kind of operation will be somewhat more efficient and offer a good deal more power than would be available to the controlling application 702 alone because the modification apparatus has access to the caller's speech, which the controlling application does not. In operation, the request for a recognition is issued by the controlling application, 702 to the modification apparatus, 701. This instruction is compared with the contents of the store of commands 706 to control the modification apparatus. If there is a command sequence found in the store of commands 706, then the modification apparatus 701 will execute those commands, interacting with the speech recognizer, 703 , and perhaps, other speech recognizers and pattern matchers, 709 and 710, before producing a result to return to the controlling application 702.

**Advantageous Features Of The Invention**

1. A speech recognition system comprising
a controller application having an output arranged to produce a speech signal, an input arranged to receive a recognized speech result signal, and a control command output arranged to produce a command signal;
a speech recognizer having a pattern matcher, a speech input arranged to receive the speech signal from the controller application, an output arranged to produce the recognized speech result signal and a control command input arranged to receive the command signal;
a modification apparatus disposed between the output of the controller application and the input of the speech recognizer; between the output of the speech recognizer and the input of the controller application; and between the control command output of the controller application and the control command input of the speech recognizer, the modification apparatus arranged to modify at least one of the signals between the controller application and the speech recognizer.

2. A speech recognition system according to feature 1, wherein the modification apparatus is disposed between the control command output of the controller application and the control command input of the speech recognizer, the modification apparatus arranged to modify the command signal between the controller application and the speech recognizer.

3. A system according to feature 2, wherein the modification apparatus adjusts variables for operation of the speech recognizer.

4. A system according to feature 3, wherein a variable is the length of time the speech recognizer waits after the caller has finished talking before returning the results back to the controller application.

5. A system according to any one of features 2 to 4, further including a caller characteristic assessment unit arranged to determine characteristics of a caller's speech and to determine what changes can be made to the command signal.

6. A system according to feature 5, wherein the caller characteristic assessment unit is part of the speech recognizer.

7. A system according to feature 5 or 6, wherein the caller characteristic assessment unit is a speech signal power level detector arranged to detect whether a person is speaking or not.

8. A system according to feature 7, wherein the speech signal power detector is a signal processor.

9. A system according to feature 8, wherein the signal processor is arranged to detect when the power of the speech signal crosses a threshold.

10. A system according to any one of features 7 to 9, wherein the detector measures the length of the pause between spoken words.

11. A system according to any one of features 5 to 10, wherein the caller characteristic assessment unit is arranged to determine whether a default length of time the speech recognizer waits after the caller has finished talking before returning the results back to the controller application is appropriate, and if it is not, determines how long it should be.

12. A system according to feature 11, wherein the assessment unit is arranged to pass the length of time to the modification apparatus.

13. A system according to feature 12, wherein the modification apparatus is arranged to store the length of time in the database.

14. A system according to any one of features 4 to 13, wherein the modification apparatus is arranged to modify the length of time the speech recognizer waits after the caller has finished talking before returning the results back to the controller application based on the characteristics of the speech.

15. A system according to feature 5 or 6, wherein the assessment unit is arranged to determine what grammar is appropriate to the characteristics of the speech signal of a speaker.

16. A system according to feature 15, wherein the assessment unit is arranged to identify whether or not a speaker's speech signal includes the characteristic of start-up and/or close-down phrases.

17. A system according to feature 15, wherein the assessment unit is arranged to identify whether or not a speaker's speech signal includes the characteristic of a dialect.

18. A system according to any one of features 15 to 17, wherein the assessment unit is arranged to pass the identity of the most appropriate grammar to the modification apparatus.

19. A system according to feature 18, wherein the modification apparatus is arranged to store the identity of the most appropriate grammar in the database.

20. A system according to any one of features 15 to 19, wherein the modification apparatus is arranged to modify the grammar before passing the speech signal to the speech recogniser.

21. A speech recognition system according to any one of the preceding features wherein the modification apparatus is disposed between the speech signal output of the controller application and the speech input of the speech recognizer, the modification apparatus arranged to modify the speech signal between the controller application and the speech recognizer.

22. A speech recognition system according to feature 21, wherein the modification apparatus is arranged to store the speech signal.

23. A speech recognition system according to feature 22, wherein the modification apparatus stores the speech signal in a database.

24. A speech recognition system according to feature 22, wherein the modification apparatus stores the speech signal in memory.

25. A speech recognition system according to feature 15 to 24, wherein the controller application is arranged to confirm the part of the speech result with the speaker.

26. A speech recognition system according to feature 25, wherein, if the speech result is wrong, the controller application is arranged to ask for the part of the speech again.

27. A speech recognition system according to feature 26, wherein the modification apparatus is arranged to send the new speech signal and the stored speech signal to the speech recogniser for recognition.

28. A speech recognition system according to feature 27, wherein the modification apparatus is arranged to send a speech signal to the speech recogniser, part of which is from the new speech signal, and part of which is from the stored speech signal.

29. A speech recognition system according to any one of features 24 to 28, wherein the part of the signal is the postcode, and the rest of the speech signal is other address information.

30. A speech recognition system according to any one of the preceding features, wherein the modification apparatus is disposed between the speech result signal output of the speech recogniser and the speech result input of the controller application, the modification apparatus arranged to modify the speech result signal between the speech recognizer and the controller application.

31. A speech recognition system according to feature 30, wherein the modification apparatus is arranged to store the speech result signal.

32. A speech recognition system according to feature 31, wherein the modification apparatus stores the speech result signal in a database.

33. A speech recognition system according to feature 31, wherein the modification apparatus stores the speech result signal in memory.

34. A speech recognition system according to feature 30 to 33, wherein the controller application is arranged to confirm the part of the speech result with the speaker.

35. A speech recognition system according to feature 34, wherein, if the speech result is wrong, the controller application is arranged to ask for the part of the speech again.

36. A speech recognition system according to feature 35, wherein the modification apparatus is arranged to send the new speech signal and the stored speech signal to the speech recogniser for recognition.

37. A speech recognition system according to feature 36, wherein the modification apparatus is arranged to send the new speech signal to the speech recogniser.

38. A speech recognition system according to feature 37, wherein the modification apparatus is arranged to combine the speech result signal from the speech recogniser with the a part of the stored speech signal.

39. A speech recognition system according to feature 38, wherein the speech result signal is the postcode, and the part of the stored speech signal is other address information.

40. A speech recognition system according to feature 44, wherein the modification device is arranged to identify defective parts of a speech signal and to modify the results signal to add an indication identifying the location corresponding to the defective part of the speech signal.

41. A speech recognition system according to feature 40, wherein the modification is arranged to identify at least one of the following as defects: missing packets; errors in a packet; and the presence of noise exceeding a noise threshold.

42. A speech recognition system according to feature 41, wherein the modification apparatus includes a counter for counting packets so as to be able to identify missing packets.

43. A speech recognition system according to feature 41 or 42, wherein the modification apparatus is arranged to read error codes in packets to identify packets containing errors.

44. A speech recognition system according to any one of feature 41 to 43, wherein the modification apparatus includes a noise detection device arranged to measure the noise level in the speech signal.

45. A speech recognition system according to any one of features 40 to 44, wherein the modification apparatus adds a marker to the result signal in a position corresponding to the defect.

46. A speech recognition system according to any one of features 40 to 45, wherein the modification device includes a word confidence score generator arranged to generate a word confidence score corresponding to words in the results signal where a defect is present.

47. A speech recognition system according to any one of features 40 to 46, wherein the controller application is arranged to identify words in the results signal where a defect is present.

48. A speech recognition system according to feature 47, wherein the controller application is arranged to identify important words from the result signal.

49. A speech recognition system according to feature 48, wherein the controller application is arranged to identify important words which include a defect.

50. A speech recognition system according to feature 49, wherein the controller application is arranged to ask a person a confirmatory question where an important word includes a defect.

51. A speech recognition system according to any one of the preceding features wherein the modification apparatus is disposed between the speech signal output of the controller application and the speech input of the speech recogniser, and between the control command output of the controller application and the control command input of the speech recogniser, the modification apparatus arranged to modify the speech signal between the controller application and the speech recogniser and to modify the command signal between the controller application and the speech recogniser.

52. A system according to feature 51 wherein the modification of the command signal causes change of operation of the speech recogniser.

53. A system according to feature 51 or feature 52 wherein the modification apparatus is arranged to store the speech signal.

54. A system according to feature 53, wherein the modification apparatus stores the speech signal in a database.

55. A system according to feature 53, wherein the modification apparatus stores the speech signal in memory.

56. A system according to any one of feature 51 to 55 wherein the modification apparatus is arranged to identify a misrecognised word.

57. A system according to feature 56 wherein the modification apparatus sends the stored speech signal to the recogniser again and the modification apparatus modifies the command signal to the speech recogniser to cause it to carry out a recognition using a different grammar.

58. A system according to any one of features 51 to 57 wherein the speech signal is sent to the speech recogniser with a first processed command signal directing the speech recogniser to recognise a first part of the speech signal, and the speech signal is sent to the speech recogniser again with a second processed command signal directing the speech recogniser to recognise a second part of the speech signal.

59. A system according to feature 58 wherein, during the recognition of the first part of the speech signal a first grammar is used, and during recognition of the second part of the speech signal, a second grammar is used.

60. A system according to any one of feature 51 to 59 further comprising a speech signal measuring device, wherein it can be determined whether or not a person is speaking.

61. A system according to the preceding feature, wherein, after a period of time has passed, the speech signal is passed to the speech recogniser for recognition.

62. A system according to the preceding feature, wherein, if a person starts speaking again before the results of recognition have been returned, the modification apparatus cancels the recognition which has already taken place.

83. A method of recognising speech in a system comprising a controller application having an output arranged to produce a speech signal, an input arranged to receive a recognised speech result signal and a control command output arranged to produce a command signal; and
a speech recogniser having a pattern matcher, a speech input arranged to receive the speech signal, an output arranged to produce the recognised speech result signal and a control command input arranged to receive the command signal,
characterised by the modification of at least one of the signals between the controller application and the speech recogniser.

84. A method according to feature 83 wherein the command signal is modified between the controller application and the speech recogniser.

85. A method according to feature 84 wherein the modification of the command signal causes a change in operation of the speech recogniser.

86. A method according to feature 84 or 85 wherein the modification adjusts variables for operation of the speech recogniser.

87. A method according to feature 86 wherein the variable is the length of time the speech recogniser waits after the caller has finished talking before returning the results to the controller application.

88. A method according to any one of features 84 to 87 further comprising determining the characteristics of a caller's speech and determining what changes can be made to the command signal.

89. A method according to feature 88 wherein determining the characteristics of a caller's speech is carried out by detecting the speech signal power level.

90. A method according to feature 89 further comprising detecting when the power of the speech signal crosses a threshold.

91. A method according to feature 89 or 90 further comprising measuring the length of the pause between spoken words.

92. A method according to any one of features 88 to 91 further comprising determining whether a default length of time the speech recogniser waits after the caller has finished talking before returning the results back to the controller application is appropriate, and if it is not, determining how long it should be.

93. A method according to feature 92 further comprising storing the length of time.

94. A method according to feature 93 in which the length of time is stored in a database.

95. A method according to any one of features 95 to 94 further comprising modifying the length of time the speech recogniser waits after the caller has finished speaking before returning the results to the controller application based on the characteristics of the speech.

96. A method according to feature 86 wherein a variable is the use of a particular grammar by the speech recogniser.

97. A method according to feature 88 further comprising determining what grammar is appropriate to the characteristics of the speech signal of a speaker.

98. A method according to feature 97 further comprising identifying whether or not a speaker's speech signal includes the characteristic of start and/or close down phrases.

99. A method according to feature 97 further comprising identifying whether or not a speaker's speech signal includes the characteristic of a dialect.

100. A method according to any one of features 97 to 99 further comprising identifying the most appropriate grammar to be used by a modification apparatus.

101. A method according to feature 100 further comprising the storing of the identity of the most appropriate grammar in a database.

102. A method according to any one of features 96 to 101, wherein the grammar is modified before passing the speech signal to the speech recogniser.

103. A method according to any one of the features 83 to 102, wherein the speech signal between the controller application and the speech recogniser is modified.

104. A method according to feature 103 further comprising the storing of the speech signal.

105. A method according to feature 104 wherein the speech signal is stored in a database.

106. A method according to feature 104 wherein the speech signal is stored in memory.

107. A method according to any one of feature 104 to 106 further comprising directing the speech signal to the speech recogniser for recognition.

108. A method according to feature 107 further comprising returning at least a part of the speech result signal to the controller application.

109. A method according to feature 108 further comprising confirming part of the speech result with the speaker.

110. A method according to feature 109 further comprising asking the speaker for the part of the speech again if the speech result is wrong.

111. A method according to feature 110 further comprising sending the new speech signal and the stored speech signal to the speech recogniser for recognition.

112 A method according to feature 111 further comprising sending a speech signal to the speech recogniser, part of which is from the new speech signal, and part of which is from the stored speech signal.

113. A method according to any one of features 108 to 112 wherein part of the signal is the post code, and the rest of the speech signal is other address information.

114. A method according to any one of features 83 to 113, further comprising modifying the speech result signal between the speech recogniser and the controller application.

115. A method according to feature 114 further comprising storing the speech result signal.

116. A method according to feature 115 further comprising storing the speech result signal in a database.

117. A method according to feature 115 further comprising storing the speech result signal in memory.

118. A method according to any one of features 115 to 117 further comprising directing the speech signal to the speech recogniser for recognition.

119. A method according to feature 118 further comprising returning at least a part of the speech result signal to the controller application.

120. A method according to feature 119 comprising confirming the part of the speech result with the speaker.

121. A method according to feature 120 further comprising asking the speaker for the part of the speech again if the speech result is wrong.

122. A method according to feature 121 further comprising sending the speech signal and the stored speech signal to the speech recogniser for recognition.

123. A method according to feature 122 further comprising sending the new speech signal to the new speech recogniser.

124. A method according to feature 123 further comprising combining the speech result signal from the speech recogniser with a part of the stored speech signal.

125. A method according to feature 124 wherein the speech result signal is the post code and the part of the stored speech signal is the other address information.

126. A method according to feature 114 further comprising identifying defective parts of a speech signal and modifying the results signal to add an indication identifying the location corresponding to the defective part of the speech signal.

127. A method according to feature 126 further comprising identifying at least one of the following as defects:

   missing packets;
   errors in a packet; and
   the presence of noise exceeding a noise threshold.

128. A method according to feature 127 further comprising the identification of missing packets by use of a packet counter.

129. A method according to feature 127 or 128 further comprising reading error codes in packets to identify packets containing errors.

130. A method according to any one of features 127 to 129 further comprising measuring the noise level in the speech signal.

131. A method according to any one of features 126 to 130 further comprising adding a marker to the result signal in a position corresponding to the defect.

132. A method according to any one of features 83 to 131, wherein the speech signal and the command signal are modified.

133. A method according to feature 132, wherein modification of the command signal causes a change in operation of the speech recogniser.

134. A method according to feature 132 or 133, further comprising storing the speech signal.

135. A method according to feature 134, further comprising storing the speech signal in a database.

136. A method according to feature 134, further comprising storing the speech signal in memory.

137. A method according to any one of features 134 to 136, further comprising directing the speech signal to the speech recogniser for recognition.

138. A method according to any one of features 134 to 137, further comprising identifying a misrecognised word.

139. A method according to feature 138, further comprising sending the stored speech signal to the recogniser again and modifying the command signal to the speech recogniser to cause it to carry out a recognition using a different grammar.

140. A method according to any one of features 132 to 139, further comprising sending the speech signal to the speech recogniser with a first processed command signal directing the speech recogniser to recognise a first part of the speech signal and sending the speech signal to the speech recogniser again with a second processed command signal directing the speech recogniser to recognise a second part of the speech signal.

141. A method according to feature 140, comprising using a first grammar during recognition of the first part of the speech signal, and using a second grammar during recognition of the second part of the speech signal.

**Claims**

1. A speech recognition system comprising
   a controller application having an output arranged to produce a speech signal, an input arranged to receive a recognized speech result signal, and a control command output arranged to produce a command signal;
   a speech recognizer having a pattern matcher, a speech input arranged to receive the speech signal from the controller application, an output arranged to produce the recognized speech result signal and a control command input arranged to receive the command signal,
   **characterised by** a modification apparatus disposed between the output of the controller application and the input of the speech recognizer; between the output of the speech recognizer and the input of the controller application; and between the control command output of the controller application and the control command input of the speech recognizer, the modification apparatus arranged to modify at least one of the signals between the controller application and the speech recognizer.

2. A speech recognition system according to claim 1, further comprising a database linked to the modification apparatus.

3. A speech recognition system according to claim 2, wherein the database is structured to store data concerning individuals including characteristics of that individual's speech or of system settings or grammars which are more appropriate for recognition of that individual's speech.

4. A speech recognition system according to claim 3, wherein the database is further structured to store data concerning individuals for use by any one or more of the speech recogniser; the modification apparatus; and the controlling application

5. A speech recognition system according to claim 1 or 2, further comprising memory arranged to store data.

6. A speech recognition system according to any of claims 1 to 5, further comprising a secondary speech recogniser connected to the modification apparatus.

7. A speech recognition system according to any one of claims 1 to 6, further comprising a second pattern matcher connected to the modification apparatus.

8. A speech recognition system according to any one of the preceding claims, further comprising a speaker verification apparatus connected to at least one of the modification apparatus and the speech recogniser.

9. A speech recognition system according to any one of the preceding claims, further comprising a speech signal measuring device.

10. A speech recognition system according to any one of the preceding claims, wherein the modification apparatus is disposed between the control command output of the controller application and the control command input of the speech recognizer, the modification apparatus arranged to modify the command signal between the controller application and the speech recognizer.

11. A system according to claim 10, wherein the modification of the command signal causes change of operation of speech recognizer.

12. A system according to claim 10 or 11, wherein the modification apparatus adjusts variables for operation of the speech recognizer.

13. A system according to claim 12, wherein a variable is the use of a particular grammar by the speech recogniser.

14. A speech recognition system according to any one of the preceding claims, wherein the modification apparatus is disposed between the speech signal output of the controller application and the speech input of the speech recognizer, the modification apparatus arranged to modify the speech signal between the controller application and the speech recognizer.

15. A speech recognition system according to claim 14, wherein the modification apparatus is arranged to store the speech signal.

16. A speech recognition system according to claim 15, wherein the modification apparatus is arranged to direct the speech signal to the speech recogniser for recognition.

17. A speech recognition system according to claim 16, wherein the modification apparatus is arranged to return at least a part of the speech result signal to the controller application.

18. A speech recognition system according to any one of the preceding claims, wherein the modification apparatus is disposed between the speech result signal output of the speech recogniser and the speech result input of the controller application, the modification apparatus arranged to modify the speech result signal between the speech recognizer and the controller application.

19. A speech recognition system according to claim 18, wherein the modification apparatus is arranged to store the speech result signal.

20. A speech recognition system according to claim 21, wherein the modification apparatus is arranged to direct the speech signal to the speech recogniser for recognition.

21. A speech recognition system according to claim 20, wherein the modification apparatus is arranged to return at least a part of the speech result signal to the controller application.

22. A speech recognition system according to any one of the preceding claims wherein the modification apparatus is disposed between the speech signal output of the controller application and the speech input of the speech recogniser, and between the control command output of the controller application and the control command input of the speech recogniser, the modification apparatus arranged to modify the speech signal between the controller application and the speech recogniser and to modify the command signal between the controller application and the speech recogniser.

23. A system according to claim 22 wherein the modification of the command signal causes change of operation of the speech recogniser.

24. A system according to any one of claims 22 to 23 wherein the modification apparatus is arranged to direct the speech signal to the speech recogniser for recognition.

25. A system according to any one of claims 1 to 24, wherein the modification apparatus is disposed between the speech signal output of the controller application and the speech signal input of the speech recogniser and between the speech result signal output of the speech recogniser and the speech result of the input of the controller application, the modification apparatus arranged to modify the speech signal between the controller application and the speech recogniser and to modify the speech result signal between the speech recogniser and the controller application.

26. A system according to any one of claims 1 to 24, wherein the modification apparatus is disposed between the speech result signal output of the speech recogniser and the speech result input of the controller application, and between the control command output of the controller application and the control command input of the speech recogniser, the modification apparatus arranged to modify the speech result signal between the speech recogniser and the controller application and arranged to modify the command signal between the controller application and the speech recogniser.

27. A system according to any one of claims 1 to 24, wherein the modification apparatus is disposed between the speech signal output of the controller application and the speech signal input of the speech recogniser, between the speech result signal output of the speech recogniser and the speech result of the input of the controller application, and between the control command output of the controller application and the control command input of the speech recogniser, the modification apparatus arranged to modify the speech signal between the controller application and the speech recogniser, to modify the speech result signal between the speech recogniser and the controller application, and to modify the command signal between the controller application and the speech recogniser.

28. A method of recognising speech in a system comprising a controller application having an output arranged to produce a speech signal, an input arranged to receive a recognised speech result signal and a control command output arranged to produce a command signal; and
a speech recogniser having a pattern matcher, a speech input arranged to receive the speech signal, an output arranged to produce the recognised speech result signal and a control command input arranged to receive the command signal,
**characterised by** the modification of at least one of the signals between the controller application and the speech recogniser.

29. A method according to claim 28 wherein the command signal is modified between the controller application and the speech recogniser.

30. A method according to claim 28 or 29, wherein the speech signal between the controller application and the speech recogniser is modified.

31. A method according to claim 29 or 30, further comprising modifying the speech result signal between the speech recogniser and the controller application.

32. A method according to any one of claims 28 to 31, wherein the speech signal and the command signal are modified.

33. A method according to claim 32, wherein modification of the command signal causes a change in operation of the speech recogniser.

101 — Input Speech ⟶

102

**Pattern matcher**

Output Pattern — 104

Control Commands

103

FIG. 1 (Prior Art)

201 ⌇ Incoming speech

Controlling
application

202

203  speech  204

Control commands

results

206

Speech
recogniser

CTRL + Click to select

205

Another
application ⌇ 207

FIG. 2 (Prior Art)

301     308     307     305

commands

Controlling application     speech     Speech recogniser

results

309

304

Telephone network    303

306

Another application

302

FIG. 3 (Prior Art)

FIG. 4

1308 1304
OPERATING SYSTEM
SPEECH RECOGNISER PROGRAM

APPLICATION PROGRAM
WORKING DATA

1310
1306
1302

1300

1324

POTS 1332
INTERNET 1322

1330
1320
1324

FIG. 5

FIG. 6

FIG. 7

FIG. 8

FIG. 9

FIG. 10

FIG. 11

FIG. 12

**Europäisches Patentamt**
**European Patent Office**
**Office européen des brevets**

# EUROPEAN SEARCH REPORT

Application Number

EP 08 16 2564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/230420 A1 (KADAMBE SHUBHA [US] ET AL) 18 November 2004 (2004-11-18) | 1-5, 8-13, 18-21, 28,29,31 | INV. G10L15/06 |
| A | * paragraphs [0003], [0005], [0008], [0010], [0019], [0020], [0024], [0030], [0052], [0068] - [0080], [0097]; figures 1-3,5 * | 6,7, 14-17, 22-27, 30,32,33 | |
| X | US H2 187 H1 (YUCHIMIUK JOHN [US]) 3 April 2007 (2007-04-03) | 1-5, 9-13, 18-21, 28,29,31 | |
| | * column 9, line 26 - column 10, line 50; figures 1-4 * | | |
| A | US 6 421 641 B1 (HUANG JING [US] ET AL) 16 July 2002 (2002-07-16) * column 3, line 45 - column 6, line 17; figures 2,4 * | 1-33 | |

TECHNICAL FIELDS SEARCHED (IPC)

G10L

The present search report has been drawn up for all claims

| Place of search | Date of completion of the search | Examiner |
|---|---|---|
| Munich | 24 October 2008 | Dobler, Ervin |

EPO FORM 1503 03.82 (P04C01)

## ANNEX TO THE EUROPEAN SEARCH REPORT
## ON EUROPEAN PATENT APPLICATION NO.

EP 08 16 2564

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2008

| Patent document cited in search report | Publication date | Patent family member(s) | Publication date |
|---|---|---|---|
| US 2004230420 A1 | 18-11-2004 | NONE | |
| US H2187 H1 | 03-04-2007 | NONE | |
| US 6421641 B1 | 16-07-2002 | NONE | |

EPO FORM P0459

For more details about this annex : see Official Journal of the European Patent Office, No. 12/82